# EUROPÄISCHE PATENTSCHRIFT

(11) **EP 0 386 595 B1**
(45) Veröffentlichungstag und Bekanntmachung des Hinweises auf die Patenterteilung: **27.04.1994**
(21) Anmeldenummer: 90103837.2
(22) Anmeldetag: 27.02.1990
(51) Int. Cl.: F16K 27/00, F16K 27/02, E03C 1/042

(54) **Mischbatterie**
Mixing valve
Robinet mélangeur

(30) Priorität: 10.03.1989 DE 3907893
(43) Veröffentlichungstag der Anmeldung: 12.09.1990
(73) Patentinhaber: FRIEDRICH GROHE AKTIENGESELLSCHAFT, D-58675 Hemer (DE)
(72) Erfinder: Humpert, Jürgen, D-5870 Hemer (DE); Pawelzik, Manfred, D-4770 Soest (DE)

(56) Entgegenhaltungen:
- EP-A- 0 123 172
- EP-A- 0 204 667
- DE-A- 2 102 402

## Beschreibung

Die Erfindung betrifft eine Mischbatterie mit wenigstens zwei voneinander distanziert angeordneten Anschlüssen für die Warm- und Kaltwasserversorgungsleitung und einem je ein Absperrventil für Kalt- und Warmwasser oder ein Misch- und Absperrventil enthaltenden Batteriekörper, der aus einem Mischteil und zwei diagonal gegenüberliegend an dem Mischteil anschließbaren Rohrstücken besteht, wobei die Anschlüsse an den Rohrstücken senkrecht zur Rohrachse vorgesehen sind.
Eine derartige Mischbatterie ist aus der EP-A-0 204 667 bekannt, wobei am Mischteil radiale vorstehende Gewindestutzen angeformt sind, in die mittels Überwurfmutterverschraubung jeweils ein rohrförmiges Teil mit einem Endbereich anschließbar ist.
Ferner ist aus der DE-A-21 02 402 eine Mischbatterie bekannt, bei der der Batteriekörper einstückig hergestellt und so ausgelegt ist, daß er für verschiedene Einsatzzwecke verwendet werden kann. Hierbei ist es jedoch erforderlich, den Batteriekörper bzw. das Gehäuse im aufwendigen Gießverfahren herzustellen.

Der Erfindung liegt daher die Aufgabe zugrunde, die Mischbatterie gemäß dem Oberbegriff des Anspruchs 1 weiter zu verbessern.

Diese Aufgabe wird erfindungsgemäß durch die im Anspruch 1 angegebenen Merkmale gelöst.
Weitere Ausgestaltungen der Erfindung sind in den Ansprüchen 2 bis 8 angegeben.

Die mit der Erfindung erzielbaren Vorteile bestehen insbesondere darin, daß der Batteriekörper aus im wesentlichen rotationssymmetrisch ausgebildeten, leicht in der Oberfläche zu bearbeitenden Einzelteilen zusammenschraubbar ist. Die Mischbatterie kann hierbei vorteilhaft als Eingriffmischventil ausgebildet werden. Die Gewindestifte zur Drehsicherung der Rohrstücke können dabei zweckmäßig so angeordnet werden, daß sie nach dem Entfernen der Eingriffmischventilkartusche am Mischteil zugänglich sind. Andererseits ist es aber auch möglich, die Mischbatterie als Zweigriffarmatur, wobei jeweils ein Absperr- und Regulierventil für die Kalt- und Warmwasserzuläufe vorgesehen ist, auszubilden.
Vorteilhaft können die Rohrstücke jeweils eine koaxiale Sackbohrung aufweisen, die radial von dem Anschluß mit Frischwasser versorgt wird, wobei an den vorstehenden Stirnseiten eine Dekorkappe oder auch ein Schlauchbrausenhalter befestigbar ist. Mit Hilfe des zusammenschraubbaren Batteriekörpers können mit Lackfarben beschichtete Armaturen in einfacher Weise mehrfarbig hergestellt werden, da die Einzelteile vor der Zusammenmontage entsprechend beschichtet werden können.

Ein Ausführungsbeispiel der Erfindung ist in der Zeichnung dargestellt und wird im folgenden näher erläutert. Es zeigt
- Figur 1: eine Mischbatterie in Vorderansicht teilweise geschnitten;
- Figur 2: die Mischbatterie gemäß Figur 1 in Seitenansicht teilweise geschnitten;
- Figur 3: ein in der Figur 1 gezeigtes Mischteil im Längsschnitt;
- Figur 4: das Mischteil gemäß Figur 2 um 90° gedreht im Längsschnitt;
- Figur 5: das Mischteil gemäß Figur 3 in Draufsicht;
- Figur 6: das in Figur 1 gezeigte Rohrstück im Längsschnitt;
- Figur 7: das Rohrstück gemäß Figur 6 in Draufsicht;
- Figur 8: eine in Figur 1 gezeigte Dekorkappe;
- Figur 9: den in Figur 1 gezeigten Schlauchbrausenhalter in Vorderansicht;
- Figur 10: den Schlauchbrausenhalter gemäß Figur 9 in Rückansicht;
- Figur 11: den Schlauchbrausenhalter gemäß Figur 9 in Draufsicht.

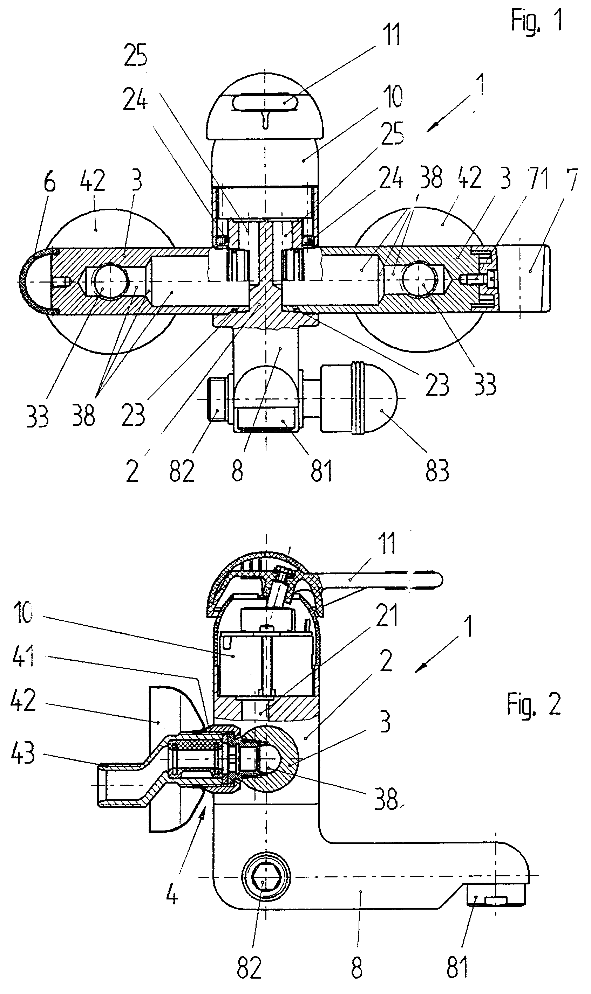

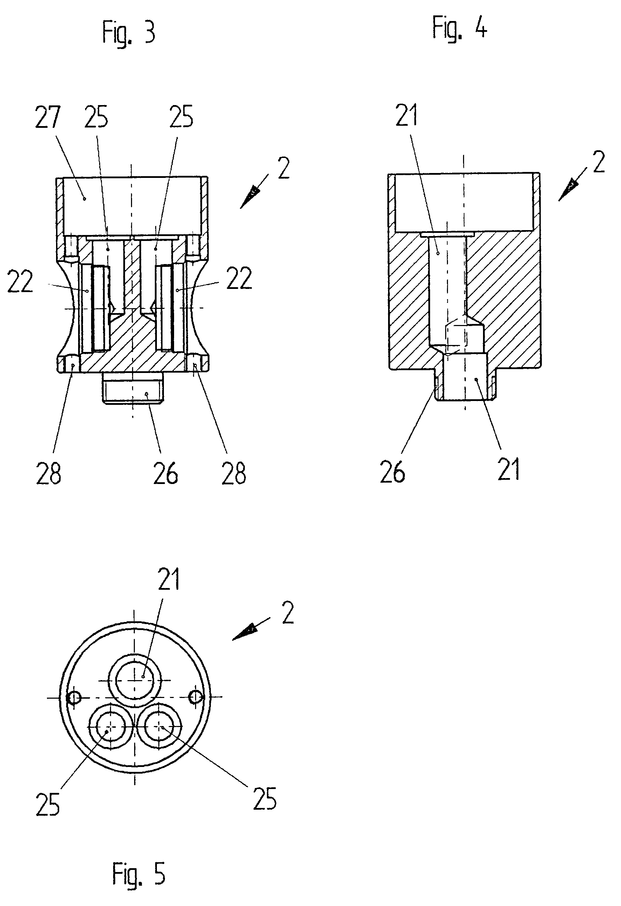

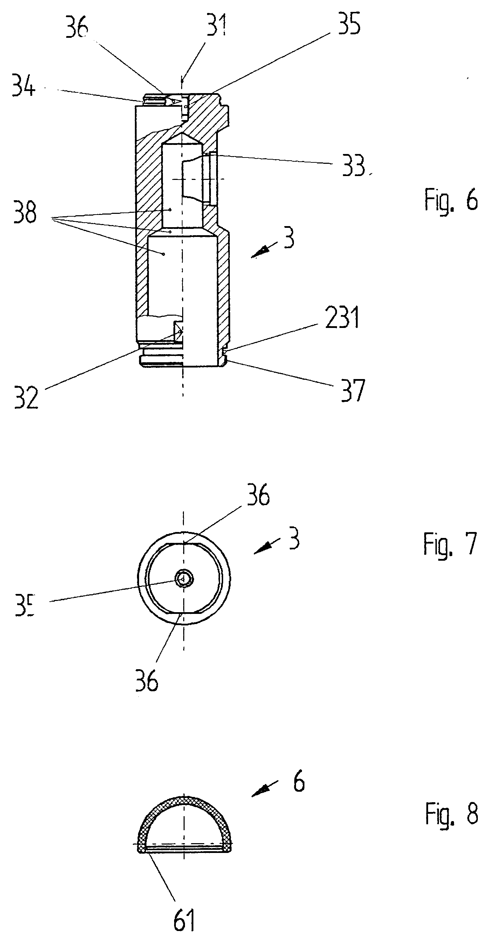

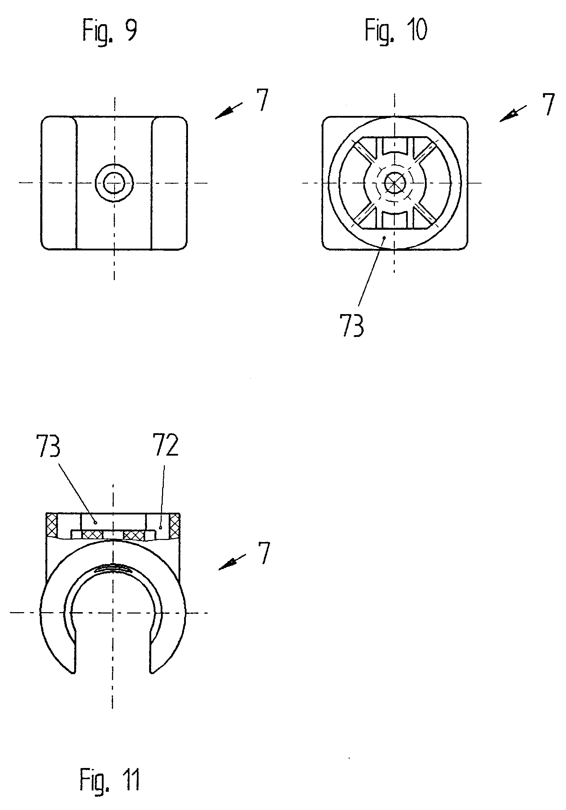

Die in Figur 1 und 2 dargestellte Mischbatterie wird im wesentlichen von einem Batteriekörper 1 gebildet, der aus einem zentral angeordneten Mischteil 2 sowie jeweils an den gegenüberliegenden Seiten in den Mischteil 2 einschraubbaren Rohrstücken 3 mit einem Anschluß 4 für die Kalt- und Warmwasserversorgungsleitung besteht. Der Anschluß 4 ist dabei in bekannter Weise als Überwurfmutterverschraubung 41 ausgebildet, mit der der Anschluß über ein sogenanntes S-Anschlußstück zur Versorgungsleitung herstellbar ist.
Zur Abdeckung des Wandanschlusses ist außerdem jeweils eine Abdeckrosette 42 vorgesehen, wie es insbesondere aus Figur 2 zu entnehmen ist.
In dem Mischteil 2 ist an der oberen Stirnseite in einer Aufnahmebohrung 27 ein Eingriffmischventil 10 angeordnet. Wie es insbesondere aus Figur 3 der Zeichnung zu entnehmen ist, ist in der Mantelfläche des zylindrischen Mischteils 2 jeweils eine Gewindebohrung 22 ausgebildet, in die jeweils ein Rohrstück 3 einschraubbar ist. Zur Verbindung der beiden Gewindebohrungen 22 mit dem Eingriffmischventil 10 sind von der Aufnahmebohrung 27 zwei parallel zur Mittelachse angeordnete Bohrungen 25 so ausgebildet, daß sie die Gewindebohrungen 22 derart schneiden, daß ein hinreichender Durchfluß gewährleistet ist. Das in dem Eingriffmischventil 10 erzeugte Mischwasser wird über eine ebenfalls aus zwei sich schneidenden Bohrungen gebildeten Auslaßöffnung 21 durch das Mischteil 2 an die untere Stirnseite einem Anschlußstutzen 26 zugeleitet, wie es insbesondere aus Figur 4 und 5 ersichtlich ist.
In die Gewindebohrung 22 kann jeweils das Rohrstück 3, wie es insbesondere in den Figuren 1,6 und 7 dargestellt ist, eingeschraubt werden. Die beiden Rohrstücke 3 haben gleiche Abmessungen, wobei an dem einen Endbereich ein Feingewinde 37 ausgebildet ist, mit dem jeweils das Rohrstück 3 in die Gewindebohrung 22 eingeschraubt wird. Hinter dem Gewinde 37 ist auf dem Rohrstück 3 eine Nute 231 ausgebildet zur Aufnahme eines Dichtrings 23. Koaxial zur Rohrachse 31 ist von der Stirnseite, an der das Feingewinde 37 ausgebildet ist, eine gestufte Sackbohrung 38 ausgebildet, an deren inneren Endbereich eine radial zur Rohrachse 31 angeordnete Gewindebohrung 33 ausgebildet ist, in die der Anschluß 4 gedichtet einschraubbar ist, wie es insbesondere auch in der Figur 2 dargestellt ist. An der dem Feingewinde 37 gegenüberliegenden Stirnseite ist eine Ringnut 34 ausgebildet, in die eine halbkugelförmige Dekorkappe 6 mit einem Wulst 61 eingeschnappt werden kann. Außerdem ist auf der Rohrachse 31 eine Gewindebohrung 35 vorgesehen, so daß mit Hilfe einer Befestigungsschraube 71 ein in den Figuren 1 und 9 bis 11 gezeigte Schlauchbrausenhalter 7 fixierbar ist. Damit der Schlauchbrausenhalter 7 bei der Ablage einer Schlauchbrause nicht um die Rohrachse 31 verdreht werden kann, sind außerdem Kantflächen 36 vorgesehen, über die der Schlauchbrausenhalter 7 mit einem Kragen 72 übergreift, wobei in dem Kragen 72 entsprechende Kantflächen 73 ausgebildet sind.
Die beiden Rohrstücke 3 werden nach dem Einschraubvorgang in den Mischteil 2 mittels Gewindestifte 24 gegen Verdrehen gesichert. Die Gewindestifte 24 sind gemäß Figur 1 der Zeichnung in von der Aufnahmebohrung 27 zugängigen Gewindebohrungen angeordnet, so daß sie nach der Einmontage des Eingriffmischventils 10 in den Mischteil 2 von außen unsichtbar sind. Selbstverständlich können aber auch die Gewindestifte 24 z.B. von der unteren Stirnseite des Mischteils 2 in Gewindebohrungen 28 angeordnet werden. Die Gewindestifte 24 wirken dabei auf Flächen 32 (Figur 6) ein, so daß ein unbeabsichtigtes Verdrehen ausgeschlossen wird. Anstatt einer oder mehrerer Flächen 32 können auch Kerben oder Riffelungen vorgesehen werden, so daß eine beliebige Drehstellung des Rohrstücks 3 in dem Mischteil 2 festgelegt werden kann.
An der unteren Stirnseite des Mischteils 2 kann an dem Anschlußstutzen 26 ein Schlauch für einen Schlauchbrausenauslauf angeschlossen werden, wobei die Schlauchbrause, abgelegt im Schlauchbrausenhalter 7, als stationärer Auslauf für eine Badewanne neben dem Handbrausenbetrieb verwendet werden kann. Alternativ kann aber auch an dem Anschlußstutzen 26 ein in den Figuren 1 und 2 dargestelltes Auslaufrohr 8 angeschlossen werden. Das Auslaufrohr 8 weist dabei einen Wannenauslauf 81 sowie eine über ein Umschaltventil 83 schaltbare Anschlußöffnung 82 für einen Brauseschlauch auf.

Die wasserführenden und insbesondere druckwasserführenden Teile der Mischbatterie können aus massivem, zylindrischem Messingmaterial durch zerspanende Bearbeitung hergestellt werden. Hierbei können zweckmäßig die Einzelteile mit Lackfarben beschichtet werden, wobei die Einzelteile vor der Zusammenmontage des Batteriekörpers entsprechend mit Lack beschichtet werden können, so daß bei der Endmontage in einfacher Weise mehrfarbige Batteriekörper herstellbar sind. Auch die nicht vom Wasser beaufschlagten Teile, wie Dekorkappe 6, Schlauchbrausenhalter 7 oder ein Handgriff 11 des Eingriffmischventils 10, können in beliebigen Farben oder Ausgestaltung an dem Batteriekörper 1 befestigt werden. Zur kostengünstigen Herstellung werden die Dekorkappen 6 oder Schlauchbrausenhalter 7 zweckmäßig aus Kunststoff im Spritzgießverfahren hergestellt.

## Patentansprüche

1. Mischbatterie mit wenigstens zwei voneinander distanziert angeordneten Anschlüssen (4) für die Warm- und Kaltwasserversorgungsleitung und einem je ein Absperrventil für Kalt- und Warmwasser oder ein Misch- und Absperrventil enthaltenden Batteriekörper, der aus einem Mischteil (2) und zwei diagonal gegenüberliegend an dem Mischteil (2) anschließbaren Rohrstücken (3) besteht, wobei die Anschlüsse (4) an den Rohrstücken (3) senkrecht zur Rohrachse (31) vorgesehen sind, dadurch gekennzeichnet, daß der Mischteil (2) zylindrisch ausgebildet ist und die Rohrstücke (3) in Gewindebohrungen (22) des Mischteils (2) mit je einem Dichtring (23) gedichtet einschraubbar und mit Hilfe einer Drehsicherung in der erforderlichen Drehstellung für die Anschlüsse (4) fixierbar sind, wobei als Drehsicherung senkrecht zur Gewindebohrung (22) im Mischteil (2) angeordnete Gewindestifte (24) vorgesehen sind, die jeweils an einer am Umfang der Rohrstücke (3) ausgebildeten Fläche (32) anliegen.

2. Mischbatterie nach Anspruch 1, dadurch gekennzeichnet, daß im Mischteil (2) ein Eingriffmischventil (10) angeordnet ist und die Zuläufe für Kalt- und Warmwasser von zwei senkrecht zu den Rohrstücken (3) im Mischteil (2) ausgebildeten Bohrungen (25) hergestellt sind, wobei jeweils eine Bohrung (25) eine Gewindebohrung (22) schneidet, so daß ein hinreichender Durchfluß gewährleistet ist.

3. Mischbatterie nach Anspruch 1, dadurch gekennzeichnet, daß für das zufließende Kalt- und Warmwasser jeweils ein Absperr- und Regulierventil, vorzugsweise diagonal den Anschlüssen (4) gegenüberliegend, vorgesehen und im Mischteil (2) eine Mischkammer zur Mischung von Kalt- und Warmwasser ausgebildet ist.

4. Mischbatterie nach einem der Ansprüche 1 bis 3, dadurch gekennzeichnet, daß die Rohrstücke (3) an der dem Mischteil (2) gegenüberliegenden Stirnseite verschlossen ausgebildet sind und wahlweise mit einer Dekorkappe (6) und/oder einem Schlauchbrausenhalter (7) zu versehen sind, wobei der Anschluß (4) jeweils in einer senkrecht zur Rohrachse (31) ausgebildeten Gewindebohrung (33) befestigt ist.

5. Mischbatterie nach einem der Ansprüche 1 bis 4, dadurch gekennzeichnet, daß an der unteren Stirnseite des Mischteils (2) ein Anschlußstutzen (26) für einen Schlauchauslauf, z.B. für eine Brause, vorgesehen ist.

6. Mischbatterie nach einem der Ansprüche 1 bis 4, dadurch gekennzeichnet, daß an der unteren Stirnseite des Mischteils (2) ein Auslaufrohr (8) angeordnet ist.

7. Mischbatterie nach Anspruch 4, dadurch gekennzeichnet, daß an der Stirnseite der Rohrstücke (3) je eine Ringnut (34) vorgesehen ist, in die die Dekorkappe (6) in der Stecklage verrastet ist.

8. Mischbatterie nach Anspruch 4 oder 7, dadurch gekennzeichnet, daß zur Befestigung des Schlauchbrausenhalters (7) eine Gewindebohrung (35) an der Stirnseite des Rohrstücks (3) ausgebildet und zur Verdrehsicherung eine oder mehrere Kantflächen (36) vorgesehen sind.

## Claims

1. Mixer tap with at least two connections (4), arranged at a distance from each other, for the hot and cold water supply line, and a tap body which contains a shut-off valve each for cold and hot water or a mixing and shut-off valve and which consists of a mixing part (2) and two pipe sections (3) that can be connected, diagonally opposed, to the mixing part (2), the connections (4) being provided on the pipe sections (3) perpendicularly to the pipe axis (31), characterised in that the mixing part (2) is cylindrical and the pipe sections (3) can each be screwed, sealed with a sealing ring (23), into threaded bores (22) in the mixing part (2) and fixed by means of a rotation-preventing means in the required rotational position for the connections (4), the rotation-preventing means provided being threaded pins (24) which are arranged perpendicularly to the threaded bore (22) in the mixing part (2) and each of which bears on a surface (32) formed on the periphery of the pipe sections (3).

2. Mixer tap according to Claim 1, characterised in that in the mixing part (2) a single lever mixing valve (10) is arranged and the inflows for cold and hot water are produced by two bores (25) formed in the mixing part (2) perpendicularly to the pipe sections (3), each bore (25) intersecting a threaded bore (22) so that an adequate through flow is ensured.

3. Mixer tap according to Claim 1, characterised in that a shut-off and regulating valve is provided for the inflowing cold water and another for the inflowing hot water, preferably diagonally opposed to the connections (4), and in the mixing part (2) a mixing chamber for mixing cold and hot water is formed.

4. Mixer tap according to one of Claims 1 to 3, characterised in that the pipe sections (3) are closed at the end face on the opposite side to the mixing part (2) and are to be selectively provided with a decorative cap (6) and/or a flexible spray hose holder (7), the connection (4) being in each case fastened in a threaded bore (33) formed perpendicularly to the pipe axis (31).

5. Mixer tap according to one of Claims 1 to 4, characterised in that on the lower end face of the mixing part (2) a connecting piece (26) is provided for a hose outlet, for example for a shower.

6. Mixer tap according to one of Claims 1 to 4, characterised in that on the lower end face of the mixing part (2) an outlet pipe (8) is arranged.

7. Mixer tap according to Claim 4, characterised in that on the end face of each pipe section (3) an annular groove (34) is provided into which the decorative cap (6) is snapped in the inserted position.

8. Mixer tap according to Claim 4 or 7, characterised in that for fastening the flexible spray hose holder (7) a threaded bore (35) is formed on the end face of the pipe section (3), and one or more flats (36) are provided for securing against rotation.

## Revendications

1. Robinet mitigeur comportant au moins deux raccords (4) distants l'un de l'autre pour la conduite d'eau chaude et la conduite d'eau froide ainsi qu'un corps de robinet comportant un robinet d'arrêt pour l'eau froide et l'eau chaude ou un robinet d'arrêt pour le mitigeur, ce corps se composant d'une partie de mitigeur (2) et de deux éléments tubulaires (3) opposés diagonalement et qui peuvent être reliés à la partie de mitigeur (2), les raccords (4) étant prévus sur les éléments tubulaires (3) perpendiculairement à l'axe (31), caractérisé en ce que la partie mitigeur (2) est de forme cylindrique et les éléments tubulaires (3) sont vissés de manière étanche chaque fois avec un joint d'étanchéité (23) dans les taraudages (22) de la pièce de mitigeur (2), en pouvant être bloqués à l'aide d'un moyen de blocage en rotation dans la position de rotation nécessaire aux raccords (4), le moyen de blocage en rotation étant constitué par des tiges filetées (24) prévues sur la partie de mitigeur (2), perpendiculairement au taraudage (22), ces tiges filetées s'appuyant contre des surfaces (32) prévues à la périphérie des éléments tubulaires (3).

2. Robinet mitigeur selon la revendication 1, caractérisé en ce que la partie de mitigeur (2) comporte un robinet (10) à une seule poignée et les alimentations d'eau froide et d'eau chaude se font par deux perçages (25) réalisés dans la partie de mitigeur (2) perpendiculairement aux éléments tubulaires (3), chaque fois un perçage (25) coupe un taraudage (22) pour assurer un débit suffisant.

3. Robinet mitigeur selon la revendication 1, caractérisé par un robinet d'arrêt et de régulation chaque fois pour l'eau froide et l'eau chaude, prévu diagonalement en regard des raccords (4), et la partie mitigeur (2) comporte une chambre de mélange pour mélanger l'eau froide et l'eau chaude.

4. Robinet mitigeur selon l'une des revendication 1 à 3, caractérisé en ce que les éléments tubulaires (3) ont des faces frontales fermées en regard de la partie mitigeur (2) et peuvent être munis au choix d'un capuchon de décoration (6) et/ou d'un support de douchette (7), le raccord (4) étant chaque fois fixé dans un taraudage (33) perpendiculaire à l'axe (31) du tube.

5. Robinet mitigeur selon l'une des revendications 1 à 4, caractérisé par un raccord (26) prévu sur la face frontale de la partie mitigeur (2) pour une sortie de tuyau par exemple le tuyau d'une douche.

6. Robinet mitigeur selon l'une des revendications 1 à 4, caractérisé par un tube de sortie (8) prévu sur la face frontale inférieure de la partie mitigeur (2).

7. Robinet mitigeur selon la revendication 4, caractérisé par une rainure annulaire (34) prévue sur la face frontale de l'élément tubulaire (3), le capuchon de décoration (6) venant s'accrocher dans cette rainure en position engagée.

8. Robinet mitigeur selon la revendication 4 ou 7, caractérisé en ce que pour fixer le support de tuyau de douche (7), la face frontale de l'élément tubulaire (3) comporte un taraudage (35) et pour le blocage une ou plusieurs surfaces munies d'arêtes (36) est prévue.
